# EUROPEAN PATENT APPLICATION

(11) **EP 1 980 841 A1**
(43) Date of publication of application: **15.10.2008**
(21) Application number: 07105950.5
(22) Date of filing: 11.04.2007
(51) Int. Cl.: G01N 21/64

(54) **Method and Apparatus for Detection and Analysis of Biological Materials through Laser Induced Fluorescence**

(71) Applicant: Estonian Biocentre, 2400 Tartu (EE)
(72) Inventor: Berik, Jevgeni, 51010, Tartu (EE); Kurg, Ants, 51010, Tartu (EE); Metspalu, Andres, 51010, Tartu (EE)
(74) Representative: Sarap, Margus

(57) **Abstract**

The present invention provides a method and an apparatus to analyze fast and accurately biological samples. The method includes prior mapping of the DNA chip with a CCD camera (4), addressed excitation of samples, and recording of fluorescence spectra via ultra-fast spectrometer (6,5).

## Description

### Technical Field

This invention belongs to the field of detection methods and equipment, based on detection of laser induced fluorescence (LIF) of various materials, more specifically biological materials and analysis thereof.

### Background Art

Several different methods (e.g. spectral measurements in infrared, visible and ultraviolet region, polarisation, phase and impulse characteristics measurements, colorimetry, radiation pyrometry; etc.) for the study and analysis of chemical and physical properties of biological materials are known, along with corresponding equipment.

Various approaches, that utilise methods and equipment based on the recording of fluorescence for the detection and analysis of biological materials such as DNA, are more widely known. A system and a method for detection of laser-induced fluorescence (LIF) of a biological sample is also described in US patent application US 20040012676 (WEINER, NATHAN K.) 22.01.2004.

Classical equipments for reading DNA chips - detectors and scanners - have two main shortcomings. First shortcoming is the low reading speed, as these apparatuses successively read the whole surface of a DNA chip. This includes areas with biological samples, as well as empty regions. Second shortcoming is that, when a point is read, its spectral characteristics are only measured in one or two points of the spectrum, which can lead to detection errors.

According to currently known approaches for the determination of the composition of a material on a carrier surface the surface is irradiated with a focused laser beam, and the resulting LIF is registered. If the surface properties have spatial difference, then the laser beam scans the carrier's surface and the intensity of the LIF is measured in each subsequent point. The total measurement time is determined by the speed of sample repositioning and the surface area to be studied.

In order to increase amount of information (or detection selectivity), a spectral filter may be placed before the element recording a fluorescence radiation, to separate certain part of the spectrum. However, to obtain adequate information about a structure of material under investigation, different filters have to be used for different wavelengths, and several consecutive scans have to be made of the object. This clearly prolongs the measurement duration in proportion with the number of wavelengths studied (i.e. filters used). The latter could be considered the primary flaw of currently known approaches and there is a need for a system that allows faster analysis without lowering the accuracy of the measurements.

Known approaches further include, for instance, US patent US 6140653 (VYSIS INC) 31.10.2000 which describes an apparatus that utilises a CCD camera as an array detector for analysing a biological sample excited by white light by reading its fluorescence radiation.

The level of technology is also presented in Estonian patent application publication EE 9900072 (ASPER OUE) 15.12.2000 that describes an apparatus and a method for parallel detection and analysis of biopolymeric molecules marked by fluorescence markers on a two-dimensional array on a surface of thin transparent carrier. Laser beam directed into the carrier spreads within it due to the condition of total internal reflection (TIR). A certain amount of radiation (evanescent wave) exits through the surface of carrier and excites LIF of the fluorophores in the composition on biopolymeric molecules on the surface of the matrix. LIF is detected by a photosensitive element (CCD camera), providing information about fluorescent molecules bound to the matrix carrier.

### Disclosure of Invention

From the above said it is evident that there is a clear need for a faster and more accurate method and related apparatus for detection and analysis of biological material.

Accordingly, it is a general object of the current invention to provide a fast and accurate method and apparatus for detection and analysis of biological material.

Another object of the current invention is to provide a method and an apparatus for the detection and analysis of biological materials using LIF with high detection speed, selectivity and sensitivity.

A further object of the current invention is to allow essentially reduced measurement time while simultaneously maintaining or increasing selectivity of data recording and increasing reliability of analysis of biological material.

Unlike approaches known so far, where samples across the entire chip area are consecutively excited by focused spot of light at scanning and LIF signal is recorded by a photomultiplier or alternatively LIF is collected using a CCD camera, the present invention provides a remarkable advantage of increased speed, achieved through several inventive steps in technical solutions. The method and apparatus according to the current inventions includes prior mapping of the DNA chip with a CCD camera, addressed excitation of samples, and recording of fluorescence spectra via ultra-fast acousto-optical spectrometry.

### Brief Description of Figures in the Drawings

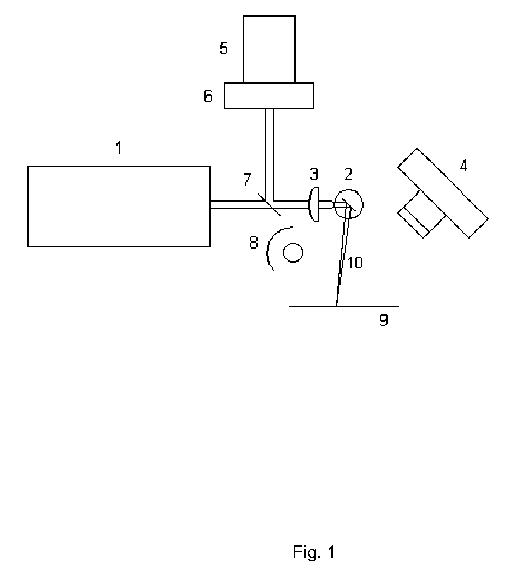

Fig. 1 illustrates one embodiment of the apparatus according to this disclosure for the detection and analysis of biological materials.

### Best Mode for Carrying Out the Invention

The analysis of biological materials is subject to low sensitivity, selectivity and speed of detection. The purpose of the method and apparatus of the present invention for the detection and analysis of biological materials using LIF is to provide a solution that has a higher speed, selectivity and sensitivity of detection than approaches known so far. The primary advantage of the apparatus and method of this invention is the speed and accuracy achieved through prior mapping of the matrix of probes on carrier (e.g. a DNA chip) with a CCD camera, addressed excitation of samples, and recording of fluorescence spectra via acousto-optical spectrometry. The inventive steps of the current disclosure allow essentially reduced measurement time while simultaneously maintaining or increasing selectivity of data recording and increasing reliability.

For detection and analysis of biological material according to the current disclosure, the sample point locations on a chip are first mapped with a CCD camera, by irradiating the chip with any light source and recording the sample point locations on the chip on the basis of spectrally broadband fluorescence or any other optical characteristics (scattering, transmittance or reflectance). This information is recorded with a computer, and by processing this information, the spatial co-ordinates of the samples are determined.

After mapping the chip the addressed excitation of samples is carried out by directing a focused laser beam consecutively at all necessary sample points; the time spent on this is related only to sample excitation and recording of LIF only from the samples studied. For LIF recording, the apparatus and the method of the present invention use an adjustable-wavelength filter, for instance an acousto-optical, an electro-optical filter, or some other fast spectral instrument that allows for a quick spectral analysis of fluorescence radiation. According to a most preferred embodiment the filter is an acousto-optical filter.

The operating principle of the acousto-optical (AO) filter is based on creation of dynamic diffracted light beam in a crystal optical element, which is affected by high frequency mechanical vibration (for instance ultrasound). As the diffracted beam direction is deviated from the entrance beam and the beam has polarization orthogonal it is possible to achieve a situation, where only the narrow spectral range corresponding to the frequency of the driving signal presents in the output and this element operates like a tunable spectral filter.

Other spectral components are cut off by spatial filtering or by crossed polarisers.

For scanning in the spectral range of visible light (400-700 nm) the ultrasound frequency has to be tuned in the range 50-300 MHz. Thus, a wavelength scan is performed by tuning the frequency of the driving ultrasound and the filter with the light detector (photomultiplier) after it is used as a spectrometer.

Spectral positions of the acousto-optical filter are set by the operator in units of ten to one hundred or more, depending on precision requirements, which depend on the measurement conditions. Since the acousto-optical filter has no moving parts, its switching speed from one spectral position to another is less than 10 microseconds. Adding to this the time directly needed for the measurement (approximately 5 microseconds), it is possible to measure spectra at twenty different wavelengths in 300 microseconds; this gives a speed of about 3000 spectra per second. After recording the fluorescence spectrum, the data is analysed on a computer by a special program and the physical-chemical properties of the sample are determined in the measured points.

The following example is meant to be descriptive and by no means limiting of the various embodiments of the present invention.

### EXAMPLE

Now referring specifically to Fig.1, the apparatus for the detection and analysis of biological materials (for instance DNA) comprises a laser 1, a spatial scanner 2, an objective 3, a CCD camera 4, a photomultiplier 5 and a fast tunable filter 6 (for instance an acousto-optical filter), that with a photomultiplier (PMP) 5 forms a spectrometer, a dichroitic beam splitter 7, a light source 8, and a sample carrier or chip 9, that has, for example, biological material samples placed on it as dots. The detection and analysis apparatus is connected to a computer (not shown in the drawing) where special programs control the apparatus, analyze the results and determine the physical-chemical properties of the sample. All details of the apparatus are integrated together into housing (not show in the drawings) in the most suitable way so that the design of the apparatus will be compact and convenient. The housing comprises in addition a place to insert a chip (9) carrying a biological material sample into apparatus for analysis. It is understandable to the person skilled in the art that the design and how the separate details are connected to the housing is not the subject matter of present invention.

Still referring to Fig. 1, the chip 9, along with sample dots, is placed in a suitable starting position for laser beam 10. Using the scanner 2, the beam 10 is directed sequentially at the samples to be studied. Fast tunable filter 6 is tuned so as to allow wavelengths λ1, λ2, etc through λi to pass through. For each position of the filter 6, fluorescence intensity is measured and the results are stored on a computer. After this, beam 10 is positioned in the next spatial position and the measurement cycle is repeated, until all positions of interest have been measured.

The resulting fluorescence spectra are processed to yield physical-chemical properties of fluorophores in the measured points.

Another embodiment of the present invention allows selecting specific sample points on the chip 9 and exciting with a laser beam 10 only these points, instead of scanning the entire surface of the chip 9. To determine the locations of these sample points, a flash picture is taken of the sample dots applied to the surface of the chip 9, illuminating it with a source of light 8, for instance a lamp or a scattered laser beam. CCD camera 4 then records a sample dot location on the surface of the chip 9. This information is used to create a virtual matrix of sample points on the surface of the chip 9, which is then used to guide laser beam 10 only to the points to be analysed. Since the number of spatial positions to be measured decreases, the total amount of time needed for measurements also decreases.

The spatial scanner 2 then directs serially the laser beam 10 only to the points under study. LIF spectrum is determined instantaneously for each point and spectral analysis of the point is then carried out.

Laser beam 10 can also be guided to a necessary position by using some other kind of scanner, for instance a mechanical one, instead of moving chip 9 and the sample dots under study.

## Claims

1. A method for detection and analysis of biological materials by using laser induced fluorescence, said method comprising following steps:
a) a focused laser beam (10) is moved to a suitable position on a chip (9) carrying a sample;
b) a fast tunable filter (6) is tuned so as to allow wavelengths λ1, λ2, through λi, to pass through;
c) for each spectral position of the fast tunable filter (6), fluorescence intensity is measured;
d) results are stored on a computer;
e) laser beam (10) is positioned in the next spatial position on the chip (9);
f) steps b to e are repeated until all positions of interest have been measured and stored;
g) resulting fluorescence spectra are processed; and
h) physical-chemical properties of fluorophores are determined in each measured points.

2. The method according to claim 1, wherein the fast tunable filter (6) is an acousto-optical filter.

3. The method according to claim1, wherein prior to step a) location of the sample points on a chip (9) are determined with a CCD camera (4) and the laser beam (10) is moved only to the determined locations on the chip (9).

4. A method for the detection and analysis of biological materials by using laser
(1) induced fluorescence, said method comprising steps of:
a) illuminating a biological material sample with light source and recording optical characteristics of the sample with a CCD camera (4);
b) based on recorded characteristics creating a virtual matrix of co-ordinates of all sample points on chip (9) surface;
c) moving by scanner (2) a focused laser beam (10) to any of sample points according to its virtual matrix position;
d) determining LIF spectrum instantaneously by fast spectrometer, said spectrometer consisting of a photomultiplier (5) and an fast tunable filter (6);
e) carrying out spectral analysis of the point;
f) moving a focused laser beam to the next sample point and repeat a procedure up to the last required point.

5. The method according to claim 4, wherein the fast tunable filter (6) is an acousto-optical filter.

6. The method for the detection and analysis of biological materials according to claim 4, wherein the excitation and measurement of fluorescence radiation spectrum are carried out within up to 1/1000 of a second.

7. The method for the detection and analysis of biological materials according to claim 5, wherein the excitation and measurement of fluorescence radiation spectrum are carried out within up to 1/1000 of a second.

8. An apparatus for applying detection and analysis of biological materials according to claim 4 by using laser (1) excitation fluorescence, said apparatus comprising
- a housing, said housing further comprising a place to insert a chip (9) carrying a biological material sample,
- a light source (1) to illuminate the sample in order to create recordable optical characters,
- a CCD camera (4) to record the optical characters for predetermination of sample point locations;
- an interconnected laser (1) to create a laser beam (10);
- a spatial scanner (2) to direct the laser beam (10) at selected sample points; and
- a spectrometer for recording laser induced fluorescence emitted from the sample spots, said spectrometer consisting of a photomultiplier (5) and an adjustable-wavelength filter (6) having passing range of λ1 through λi , whereby fluorescence intensity at each selected wavelength is measured.

9. The apparatus for the detection and analysis of biological materials using laser excitation fluorescence according to claim 8, wherein the adjustable-wavelength filter (6) is an acousto-optical filter.
